# EUROPÄISCHE PATENTANMELDUNG

(11) **EP 1 619 850 A1**
(43) Veröffentlichungstag der Anmeldung: **25.01.2006**
(21) Anmeldenummer: 04017217.3
(22) Anmeldetag: 21.07.2004
(51) Int. Cl.: H04L 29/06, H04L 29/12

(54) **Verfahren und Vorrichtung zum Aufbau von multi-homed Verbindungen in Netzwerken mit Adressumsetzung**

(71) Anmelder: SIEMENS AKTIENGESELLSCHAFT, 80333 München (DE)
(72) Erfinder: Schrüfer, Wolfgang, 85757 Karsfeld (DE)

(57) **Zusammenfassung**

Die Erfindung ein Verfahren zum Aufbau einer multi-homed Verbindung mit einer Anzahl n von Pfaden zwischen zwei Komponenten eines Kommunikationsnetzes. Dabei weisen die Komponenten jeweils mindestens n Kommunikationsadressen auf, und im Verbindungsweg findet eine Umsetzung der Kommunikationsadressen zumindest einer ersten der Komponenten statt. Das Verfahren weist die folgenden Schritte auf: Ermitteln von n Umsetzungsbeziehungen von für die n Pfade vorgesehenen n Kommunikationsadressen durch die Komponenten; und Aufbau der multi-homed Verbindung durch Aufbau der n Pfade anhand der ermittelten Umsetzungsbeziehungen. Die n Umsetzungsbeziehungen jeweils ganz oder teilweise werden durch Austauschen von Testnachrichten für k (k = 1..n) Kommunikationsadressen zwischen den Komponenten ausgetauscht werden, welche k Umsetzungsbeziehungen liefern. Dabei werden die Testnachrichten so gewählt, daß die Umsetzung der Kommunikationsadressen für Testnachrichten identisch ist zur Umsetzung der Kommunikationsadressen für die späteren Pfade der multi-homed Verbindung. Alternativ können Umsetzungsbeziehungen ermittelt werden durch Aufbau von m (m = 1..n) single-homed Verbindungen zwischen den Komponenten aufgebaut werden. Dabei kann vorzugsweise, um einen mehrmaligen Auf- und Abbau von Verbindungen bzw. Pfaden zu verhindern, vorgesehen werden, die single-homed Verbindungen als Pfade zu der multi-homed Verbindung verknüpft werden.

## Beschreibung

Die vorliegende Erfindung bezieht sich auf ein Verfahren zum Aufbau von multi-homed Verbindungen, wobei im Verbindungsweg eine Umsetzung von Kommunikationsadressen stattfindet. Insbesondere bezieht sich die Erfindung auf ein Verfahren zum Aufbau einer SCTP-Verbindung mit mehreren Pfaden in IP-Netzwerken mit Network Adress Translation (NAT).

Kommunikationsnetze, in denen Kommunikationsprotokolle zum Einsatz kommen, bei denen sogenannte single-homed Verbindungen stets von genau einem Endpunkt zu genau einem anderen Endpunkt führen, sind heutzutage sehr weit verbreitet. Ein Beispiel für ein solches Kommunikationsprotokoll ist das Internetprotokoll IP mit den darauf aufsetzenden Protokollen TCP und UDP. In diesen Protokollen werden Endpunkte durch eine IP-Adresse und eine Port-Nummer identifiziert.

Häufig sind, wie im Fall der weitverbreiteten IP-Kommunikationsnetze, zusätzliche Maßnahmen erforderlich, um für an das Kommunikationsnetz angeschlossene Endpunkte und andere Netzwerkkomponenten eine zuverlässige Kommunikationsverbindung zu schaffen, etwa die redundante Ankopplung an das Kommunikationsnetz. Dabei sind jedoch die Basisprotokollmechanismen selten geeignet, diese redundante Ankopplung effizient zu verwalten und zu nutzen, da die Basisprotokollmechanismen nur single-homed Verbindungen vorsehen.

Es wurden und werden daher Anstrengungen unternommen, Kommunikationsprotokolle zu schaffen, die - basierend auf den Basisprotokollen - Applikationen, die auf Endpunkten und anderen Netzwerkkomponenten implementiert sind, die Möglichkeit geben, mehrere eigene Kommunikationsadressen für eine Verbindung zu definieren. Mehrere Kommunikationsadressen können beispielsweise im Wege mehrerer Netzwerkkarten vorgesehen werden. Kann eine Netzwerkkomponente zu einer Verbindung mehrere eigene (und ggf. entfernte) Kommunikationsadressen nutzen, spricht man häufig von Multihoming bzw. von multi-homed Verbindungen.

Ein Beispiel für ein solches Kommunikationsprotokoll mit erweiterten Fähigkeiten zum Einsatz in IP-Kommunikationsnetzen ist das Session Control Transmission Protocol SCTP, definiert in IETF RFC 2960.

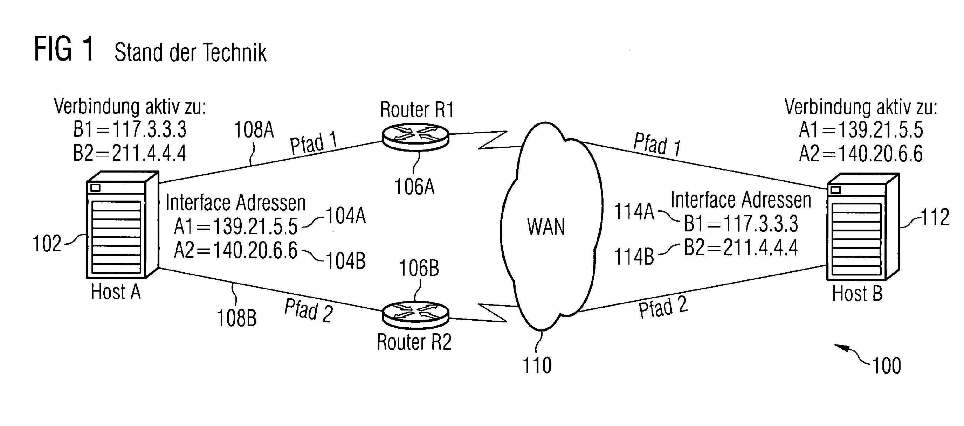

Fig. 1 zeigt ein beispielhaftes IP-Kommunikationsnetzwerk 100 mit einem ersten Endpunkt bzw. Host A 102 und einem zweiten Endpunkt bzw. Host B 112, die jeweils über zwei (globale) IP-Adressen 104A, 104B und 114A, 114B verfügen. Eine (SCTP) Verbindung zwischen den Endpunkten wird durch zwei Pfade 108A, 108B gebildet, die vorzugsweise verschieden sind, d.h. über verschiedene Router 106A, 106B durch das Kommunikationsnetz, welches auch ein Weitverkehrsnetz WAN 110 einschließen kann, verlaufen. Das Protokoll SCTP oder ein ähnliches Kommunikationsprotokoll verwaltet und nutzt diese beiden Pfade beispielsweise derart, daß der Ausfall eines Pfades, etwa bei Ausfall eines der Router 106, die Ende-zu-Ende-Kommunikation nicht unterbricht, da sofort der andere Pfad genutzt werden kann. Die Zahl der Pfade ist dabei nicht auf zwei beschränkt.

Ein großer Nachteil der multi-homed Verbindungen liegt darin, daß diese regelmäßig nicht aufgebaut werden können, wenn im Verbindungsweg eine Umsetzung der Kommunikationsadressen stattfindet, wie z.B. für IP-Kommunikationsnetzwerke als Network Address Translation (NAT) bekannt, definiert in IETF RFC 1631. Allgemein kann die Umsetzung einer Kommunikationsadresse in IP-Kommunikationsnetzwerken beispielsweise durch Veränderung einer IP-Adresse oder einer Portnummer oder durch Veränderung beider Adreßbestandteile erfolgen. Dabei kann eine Empfängeradresse und/oder eine Absenderadresse der Umsetzung unterliegen.

Es ist daher eine Aufgabe der Erfindung, ein Verfahren zum Aufbau einer multi-homed Verbindung anzugeben, wenn im Verbindungsweg eine Umsetzung der Kommunikationsadressen stattfindet.

Diese Aufgabe wird gelöst durch ein Verfahren zum Aufbau einer multi-homed Verbindung mit einer Anzahl n von Pfaden zwischen zwei Komponenten eines Kommunikationsnetzes. Dabei weisen die Komponenten jeweils mindestens n Kommunikationsadressen auf, und im Verbindungsweg findet eine Umsetzung der Kommunikationsadressen zumindest einer ersten der Komponenten statt. Das Verfahren weist die folgenden Schritte auf:
- Ermitteln von n Umsetzungsbeziehungen von für die n Pfade vorgesehenen n Kommunikationsadressen durch die Komponenten; und
- Aufbau der multi-homed Verbindung durch Aufbau der n Pfade anhand der ermittelten Umsetzungsbeziehungen.

Die Umsetzungsbeziehung ist dabei häufig dadurch charakterisiert, daß eine lokale Kommunikationsadresse einer ersten Komponente in eine globale Kommunikationsadresse umgesetzt wird. Erst die Kenntnis dieser globalen Adresse ermöglicht es anderen Komponenten, diese erste Komponente zu adressieren. Hierzu ist es allerdings nicht erforderlich, daß die anderen Komponenten die komplette Umsetzungsbeziehung, d.h. neben der globalen auch noch die lokale Kommunikationsadresse, kennen. Für einen erfolgreichen Verbindungsaufbau genügt es, wenn die adreßumsetzende Komponente, z.B. ein Router, die vollständige Umsetzungsbeziehung kennt.

Dabei können die n Umsetzungsbeziehungen jeweils ganz oder teilweise beispielsweise nach einem der folgenden Verfahren ermittelt werden:
- Austauschen von Testnachrichten für k (k = 1..n) Kommunikationsadressen zwischen den Komponenten, welche k Umsetzungsbeziehungen liefern. Dabei werden die Testnachrichten so gewählt, daß die Umsetzung der Kommunikationsadressen für Testnachrichten identisch ist zur Umsetzung der Kommunikationsadressen für die späteren Pfade der multi-homed Verbindung.
- Aufbau von m (m = 1..n) single-homed Verbindungen zwischen den Komponenten. Dabei kann vorzugsweise vorgesehen werden, diese single-homed Verbindungen in einem weiteren Schritt als neue Pfade mit der multi-homed Verbindung zu verknüpfen.

Die vorliegende Erfindung betrifft ferner Komponenten eines Kommunikationsnetzes, die über Software- oder Hardwaremittel verfügen, um das erfindungsgemäße Verfahren auszuführen.

Ein Kommunikationsprotokoll, das bei Anwendung im Zusammenhang mit der vorliegenden Erfindung besonders vorteilhaft erweitert werden kann, ist das Stream Control Transmission Protocol SCTP.

Ein besonderer Vorteil der Erfindung ist darin zu sehen, daß es möglich ist, multi-homed Verbindungen auch über Adreßumsetzer, z.B. NAT-Router, die nur die standardisierten Adreßumsetzungsverfahren unterstützen, aufzubauen. Das bedeutet im Fall der IP-Netzwerke, daß an den NAT-Routern keine Veränderungen vorgenommen werden müssen, so daß die Erfindung unmittelbar ohne Änderung der Netzinfrastruktur angewendet werden kann. Lediglich die Endpunkte von SCTP-Assoziationen müssen das Verfahren unterstützen.

Die Erfindung kann vorteilhaft auch zur dynamischen Umkonfigurierung von Kommunikationsadressen, z.B. IP-Adressen, verwendet werden, ohne daß eine bestehende Verbindung unterbrochen wird. Dies kann zum Beispiel beim Tausch physikalischer Netzwerkkarten, bei dynamischen Adreßwechseln oder bei schnurlosen Anwendungen vorteilhaft sein.

Im folgenden wird die Erfindung in Ausführungsbeispielen anhand von Zeichnungen näher erläutert.
Fig. 1 zeigt in schematischer Darstellung ein IP-Netzwerk mit einer Verbindung mit zwei Pfaden über Router ohne Adreßumsetzung.
Fig. 2 zeigt in schematischer Darstellung ein IP-Netzwerk mit einer Verbindung mit zwei Pfaden über Router mit Adreßumsetzung.
Fig. 3A-C zeigen in schematischer Darstellung den Ablauf der Erstellung der Verbindung aus Fig. 2.

Fig. 1 zeigt, wie bereits erläutert, das IP-Kommunikationsnetzwerk 100, in dem es gemäß des Standes der Technik keine Schwierigkeiten bereitet, zwischen dem ersten Endpunkt 102 und dem zweiten Endpunkt 112, die jeweils über zwei (globale) IP-Adressen 104A, 104B und 114A, 114B verfügen, eine durch zwei Pfade 108A, 108B gebildete SCTP Verbindung bzw. SCTP Assoziation aufzubauen.

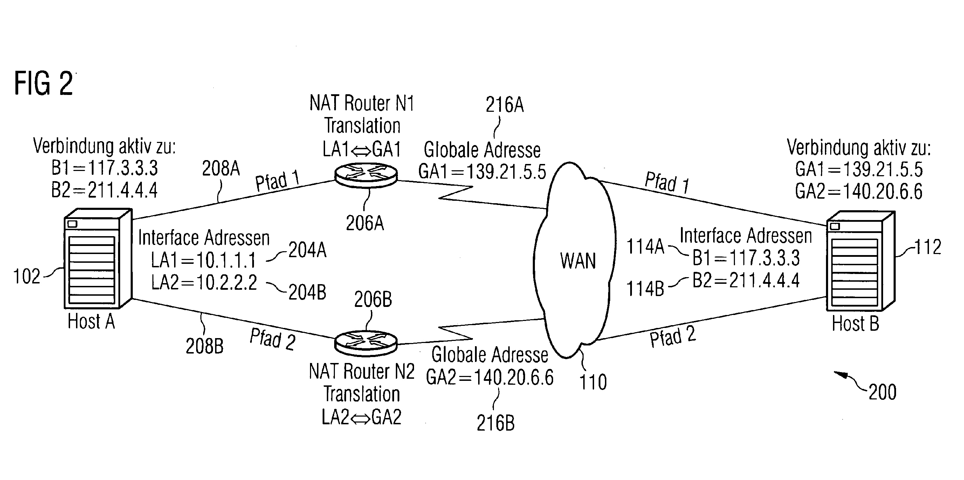

Fig. 2 zeigt eine ähnliche Situation wie Fig. 1, allerdings mit NAT Routern 206A und 206B anstelle der Router 106A und 106B. Im Detail zeigt Fig. 2 ein beispielhaftes IP-Kommunikationsnetzwerk 200 mit dem ersten Endpunkt bzw. Host A 102 und dem zweiten Endpunkt bzw. Host B 112. Host A 102 verfügt dabei über zwei nur lokal gültige IP-Adressen LA1 (204A), LA2 (204B) (im Beispiel wurden die IP-Adressen LA1 = 10.1.1.1 und LA2 = 10.2.2.2 gewählt), welche durch NAT-Router 206A und 206B in globale Adressen GA1 (216A), GA2 (216B) umgewertet werden (im Beispiel wurden die IP-Adressen GA1 = 139.21.5.5 und GA2 = 140.20.6.6 gewählt). Host B 112 verfügt über zwei globale IP-Adressen B1 (114A) und B2 (114B). Zur Vereinfachung der Darstellung wurde in Fig. 2 auf die Darstellung der Ports verzichtet.

Eine SCTP Assoziation zwischen den Endpunkten A und B wird durch zwei Pfade 208A, 208B gebildet, wobei der erste Pfad 208A die lokale Adresse LA1 des Host A über den ersten NAT-Router N1 (206A), die Umsetzungsbeziehung LA1 <==> GA1 und das optionale WAN 110 mit der ersten Adresse B1 des Host B verbindet. Der zweite Pfad 208B verbindet die lokale Adresse LA2 des Host A über den zweiten NAT-Router N2 (206B), die Umsetzungsbeziehung LA2 <==> GA2 und das optionale WAN 110 mit der zweiten Adresse B2 des Host B.

Für die Anordnung des Host A in einem separaten Netz mit nur lokal gültigen IP-Adressen LA1, LA2 kann es verschiedene Gründe geben. Ein möglicher Grund ist die Knappheit globaler IP-Adressen, die es erforderlich macht, mit dieser Ressource sparsam umzugehen und beispielsweise große Unternehmensnetze als private Netze mit privaten, d.h. nur lokal gültigen und aus dem Internet nicht adressierbaren Adressen auszugestalten. Ein weiterer möglicher Grund sind Sicherheitserwägungen, denn in vielen Fällen ist bereits die Ausgestaltung eines Netzes als privates Netz, ggf. ergänzt um NAT-Router mit Firewall-Funktionen oder separate Firewalls, ein signifikanter Sicherheitsgewinn.

Allerdings ist es mit dem Protokoll SCTP gemäß RFC 2960 nicht möglich, eine SCTP Assoziation mit zwei Pfaden 208A, 208B gemäß Fig. 2 aufzubauen, denn im SCTP Verbindungsaufbau werden die weiteren Absenderadressen in einem Nachrichtenfeld der Verbindungsanforderungsnachricht über den ersten Pfad übertragen.

Im Beispiel der Fig. 1 wird die Verbindung von A aus aufgebaut, indem die erste Adresse von A, A1, als Absenderadresse der Verbindungsanforderungsnachricht verwendet wird und die zweite Adresse von A, A2, in ein Nachrichtenfeld dieser Nachricht eingetragen wird. Bei Empfang dieser Nachricht bei B liegen dort alle erforderlichen Informationen zum Aufbau beider Pfade vor.

Im Beispiel der Fig. 2 hingegen würde B die umgesetzte erste Adresse GA1 und die nicht umgesetzte lokale Adresse LA2 empfangen, so daß der zweite Pfad 208B nicht aufgebaut werden kann. Der erste NAT-Router 206A hat auch keine Möglichkeit, die Umsetzung der Adresse LA2 auf die Adresse GA2 im zweiten Router zu ermitteln.

Um die Verbindung gemäß Fig. 2 dennoch aufbauen zu können, werden zunächst die Adreßumsetzungsbeziehungen LA1 <==> GA1 und LA2 <==> GA2 ermittelt, um anschließend die zwei-pfadige SCTP Assoziation erstellen zu können.

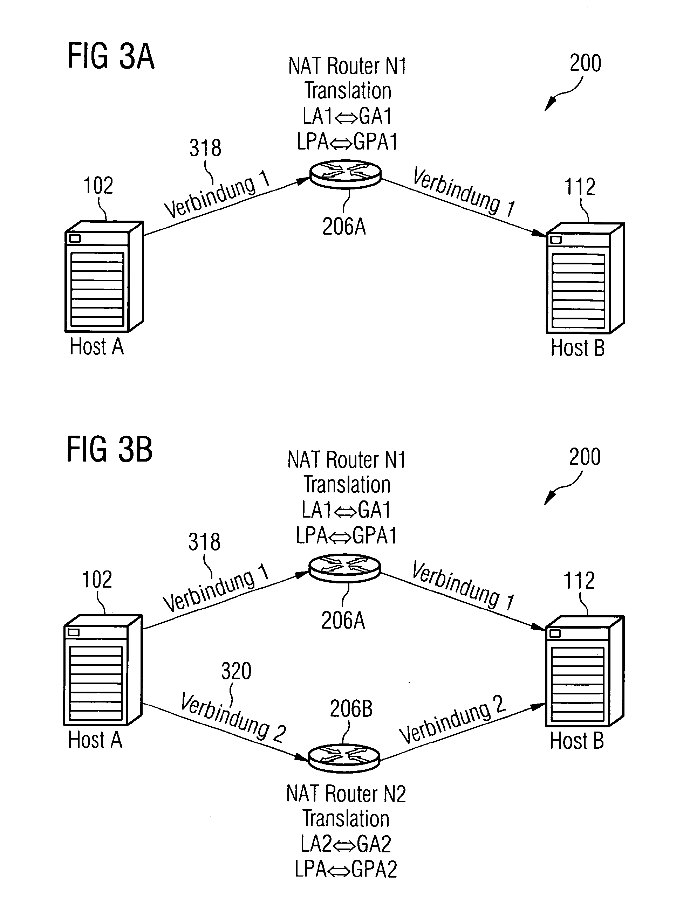

Fig. 3A-C zeigen einen beispielhaften Ablauf, demgemäß zunächst zwei single-homed Verbindungen aufgebaut werden (Fig. 3A-B) und anschließend zu einer gemeinsamen SCTP Assoziation verknüpft bzw. verschmolzen werden. Zur Vereinfachung der Darstellung wurde dabei in Fig. 3A-C auf die Darstellung des WAN 110 und der Adressen 204, 114, 216 verzichtet.

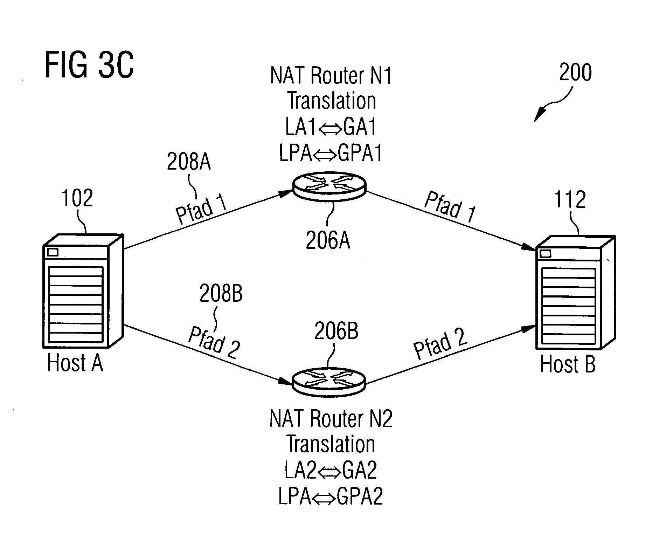

Fig. 3A zeigt den ersten Schritt des Aufbaus der multi-homed Verbindung, die Ermittlung der ersten Adreßumsetzung LA1 <==> GA1. Die erste Adreßumsetzung wird im Beispiel der Fig. 3 ermittelt, indem eine erste Verbindung 318 von der ersten lokalen Adresse LA1 von Host A zur ersten (globalen) Adresse B1 von Host B aufgebaut wird. Dabei sei angenommen, daß das Routing dieser Verbindung 318 über den ersten NAT-Router 206A erfolgt. Die Verbindung ist eine klassische "single-homed" Verbindung bzw. Assoziation. Folgende Tabelle veranschaulicht die Zusammenhänge für Verbindung 318:

| | Host A: | Host B: |
|---|---|---|
| Erste eigene IP Adresse | LA1 | B1 |
| Zweite eigene IP Adresse | - | - |
| Eigener Port | LPA1 | PB1 |
| Erste Partner IP Adresse | B1 | GA1 |
| Erster Partner Port | PB1 | GPA1 |
| Zweite Partner IP Adresse | - | - |
| Zweiter Partner Port | - | - |
| Eigenes Verification Tag | VTA1 | VTB1 |
| Partner Verification Tag | VTB1 | VTA1 |

Darin bedeuten:
- LA1:: erste lokale Adresse des Host A
- B1:: erste (globale) Adresse des Host B
- LPA1:: erster lokaler Port des Host A (zu LA1)
- PB1:: erster Port des Host B (zu B1)
- GA1:: erste globale Adresse, LA1 <==> GA1
- VTA1:: Verification Tag von Host A für die erste Verbindung
- VTB1:: Verification Tag von Host B für die erste Verbindung

Die Verification Tags VTA1, VTB1 erlangen später im Zusammenhang mit der Verknüpfung der beiden Verbindungen ihre Bedeutung und werden im Zusammenhang mit Fig. 3C näher erläutert. Im Ergebnis des Schrittes der Fig. 3A ist nunmehr die erste Adreßumsetzungsbeziehung LA1 <==> GA1 ermittelt.

Fig. 3B zeigt den zweiten Schritt des Aufbaus der multi-homed Verbindung, die Ermittlung der zweiten Adreßumsetzung LA2 <==> GA2. Die zweite Adreßumsetzung wird im Beispiel der Fig. 3 ermittelt, indem eine zweite Verbindung 320 von der zweiten lokalen Adresse LA2 von Host A zur zweiten (globalen) Adresse B2 von Host B aufgebaut wird. Dabei sei angenommen, daß das Routing dieser Verbindung 320 über den zweiten NAT-Router 206B erfolgt. Die Verbindung ist ebenfalls eine klassische "single-homed" Verbindung bzw. Assoziation. Alternativ kann eine single-homed Verbindung vom Typ "merge only" erstellt werden (dieser Typ wird weiter unten näher erläutert). Folgende Tabelle veranschaulicht die Zusammenhänge für Verbindung 320:

| | Host A: | Host B: |
|---|---|---|
| Erste eigene IP Adresse | LA2 | B2 |
| Zweite eigene IP Adresse | - | - |
| Eigener Port | LPA2 | PB2 |
| Erste Partner IP Adresse | B2 | GA2 |
| Erster Partner Port | PB2 | GPA2 |
| Zweite Partner IP Adresse | - | - |
| Zweiter Partner Port | - | - |
| Eigenes Verification Tag | VTA2 | VTB2 |
| Partner Verification Tag | VTB2 | VTA2 |

Darin bedeuten:
- LA2:: zweite lokale Adresse des Host A
- B2:: zweite (globale) Adresse des Host B
- LPA2:: zweiter lokaler Port des Host A (zu LA2)
- PB2:: zweiter Port des Host B (zu B2)
- GA2:: zweite globale Adresse, LA2 <==> GA2
- VTA2:: Verification Tag von Host A für die zweite Verbindung
- VTB2:: Verification Tag von Host B für die zweite Verbindung

Im Ergebnis des Schrittes der Fig. 3B ist nunmehr auch die zweite Adreßumsetzungsbeziehung LA2 <==> GA2 bekannt.

Fig. 3C zeigt die Verschmelzung bzw. Verknüpfung der beiden Verbindungen bzw. Assoziationen 318 und 320 zu der angestrebten SCTP Assoziation 208 mit den Pfaden 208A und 208B. Im bevorzugten Ausführungsbeispiel sendet Host A 102 hierzu über die erste Verbindung 318 einen SCTP Chunk ASCONF, wie in folgendem Internet Draft der IETF definiert: http://www.ietf.org/internet-drafts/draft-ietf-tsvwg-addipsctp-09.txt (im folgenden als addip-draft bezeichnet), erweitert um einen Parameter, welcher Host B 112 anzeigt, daß eine parallele Assoziation (hier: zweite Verbindung 310) als zusätzliche Adresse eingebunden werden soll. Dieser Parameter, im folgenden als "Merge SCTP Endpoint" bezeichnet, nutzt die Verification Tags, die den einzelnen Verbindungen bzw. Assoziationen 318 und 320 beim Aufbau zugeordnet wurden.

Der ASCONF Chunk ist wie folgt definiert (Auszug aus o.g. IETF Draft, mit Übersetzungen aus dem Englischen): 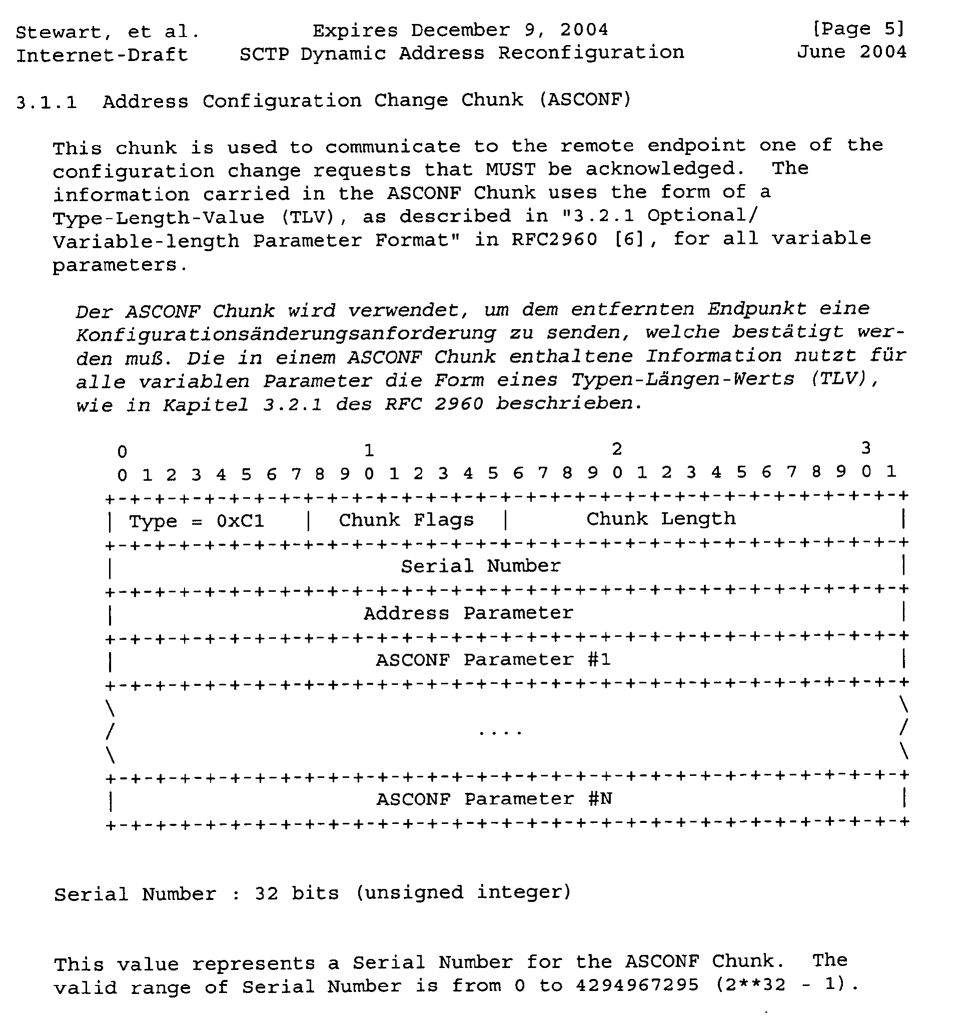 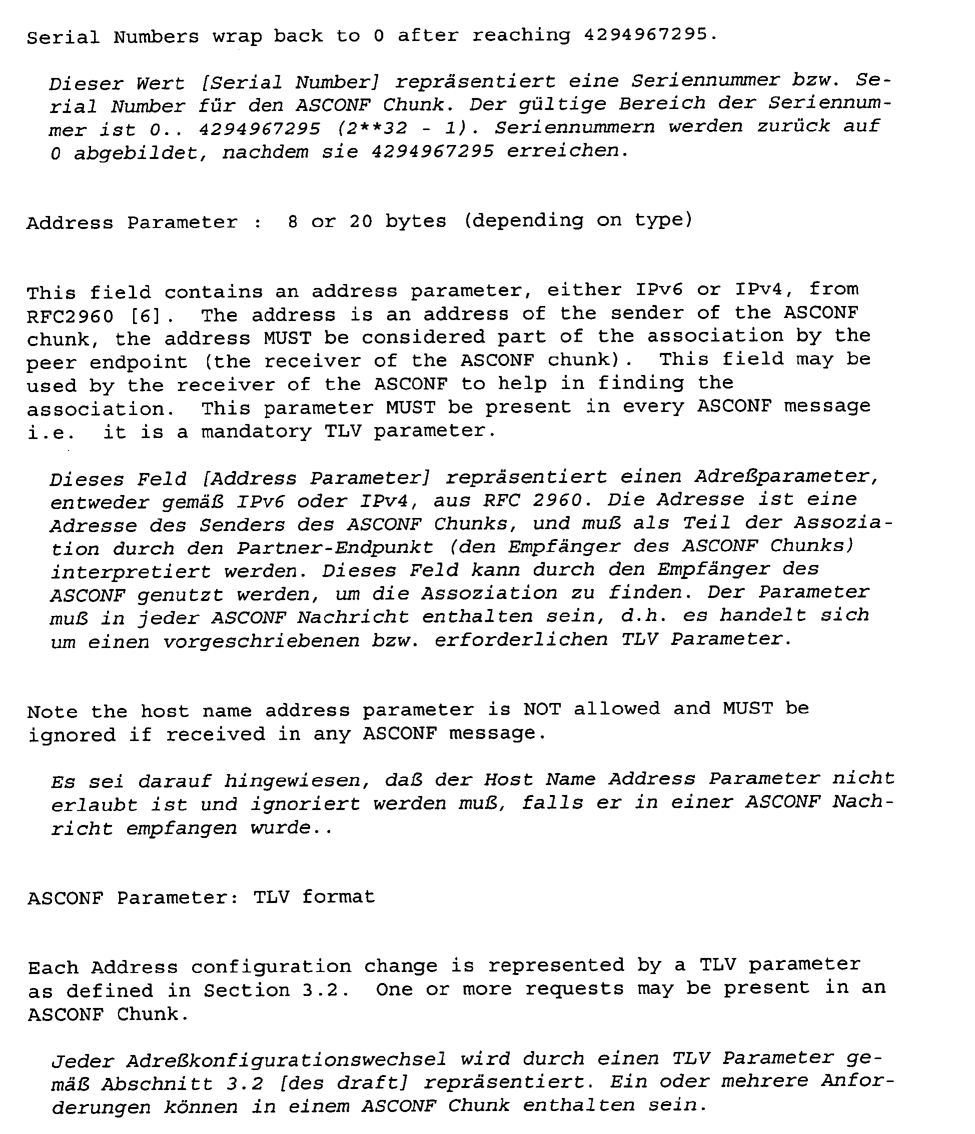 Dem ASCONF Chunk ist ein ASCONF ACK Chunk zugeordnet, der wie folgt definiert ist (Auszug aus o.g. IETF Draft, mit Übersetzungen aus dem Englischen):

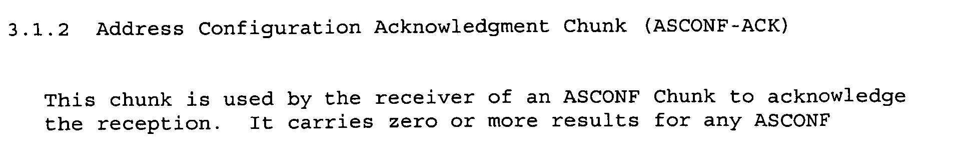

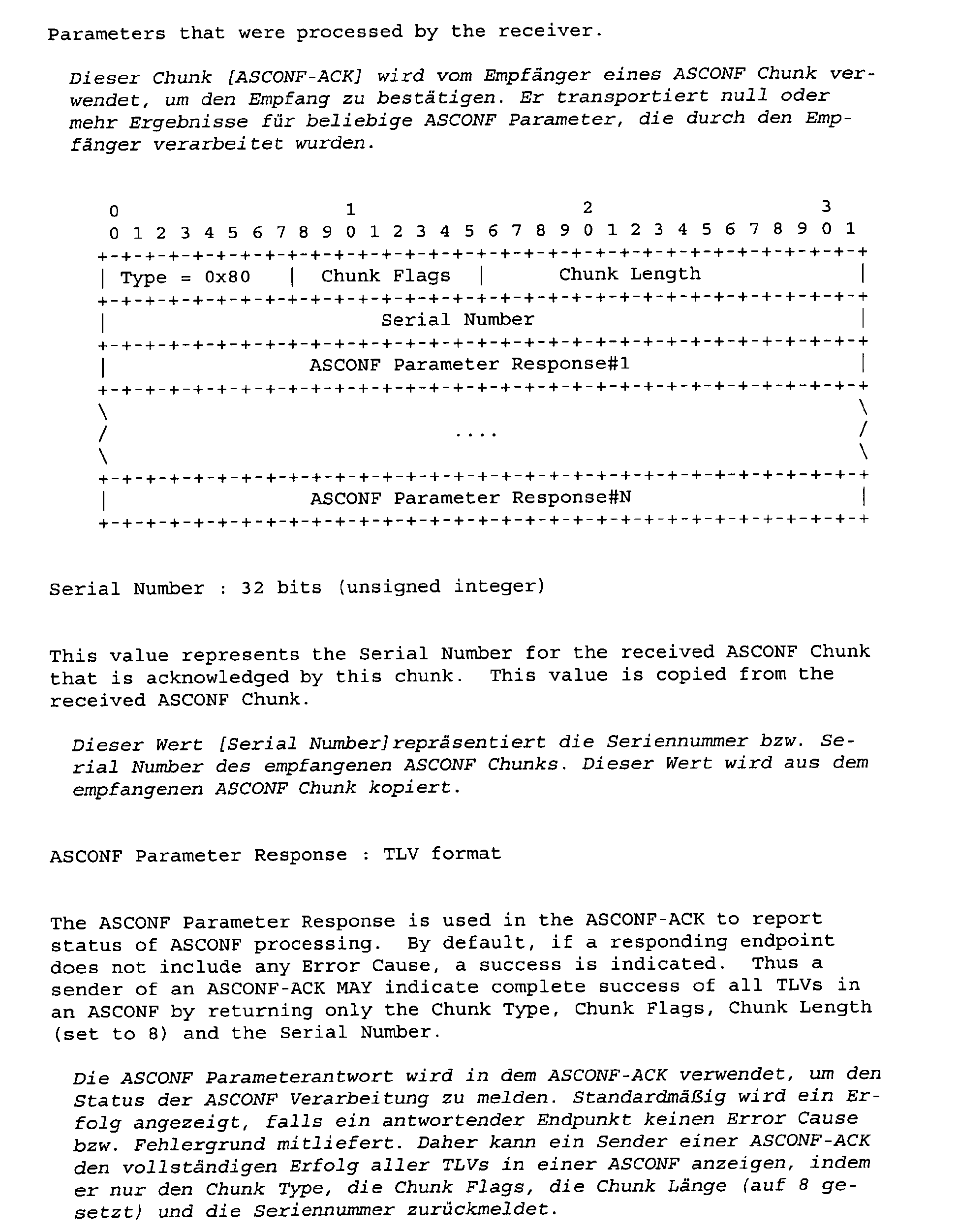

Folgende neue Parameter werden (zusätzlich oder anstelle zu den beispielsweise durch o.g. draft bereits vorgesehenen SCTP Parametern) definiert, um das Verknüpfen bzw. Verschmelzen (MERGE) von Verbindungen bzw. Assoziationen zu unterstützen (Tabelle 1: Parameter für ASCONF Chunks; Tabelle 2: Parameter für INIT/INIT-ACK Chunks):

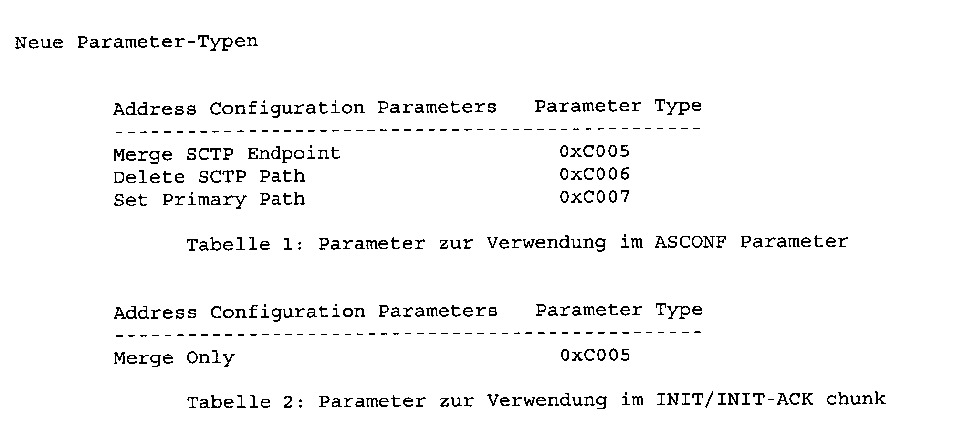

Wie bei SCTP üblich kann vorgesehen werden, daß durch den Empfänger eines ungültigen Parameters ein ABORT gesendet werden kann.

Die neuen Parameter werden im folgenden näher erläutert (Darstellung der Parameter gemäß der IETF Konventionen):

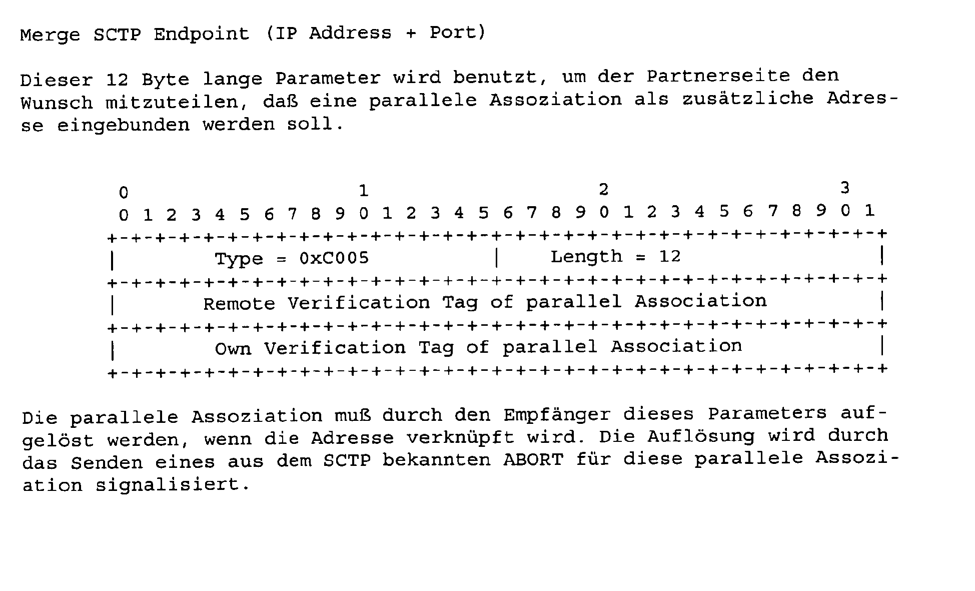

Um einen bestehenden Pfad wieder abzubauen, kann der aus dem addip-draft bekannte Parameter Delete IP Address nicht unverändert verwendet werden, da keine Kommunikationsadressewie bisher üblich - - in einem Parameter eingebunden werden darf. Anstelle dessen wird der zu entfernende Pfad durch die bekannte Umsetzungsbeziehung und die Absenderadresse des Paketes, das den Parameter enthält, eindeutig identifiziert, und es kann beispielsweise der folgende Parameter verwendet werden:

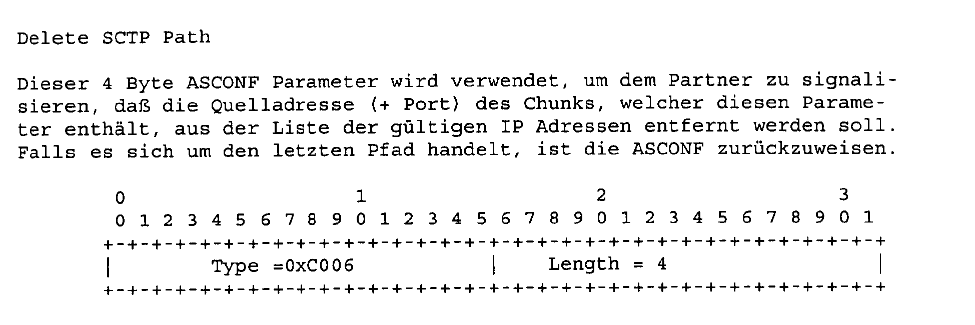

Um einen Pfad als primär bzw. bevorzugt zu kennzeichnen, kann aus gleichem Grunde der aus dem addip-draft bekannte Parameter Set Primary Address nicht unverändert verwendet werden. Anstelle dessen wird der zu kennzeichnende Pfad durch die bekannte Umsetzungsbeziehung und die Absenderadresse des Paketes, das den Parameter enthält, eindeutig identifiziert, und es kann beispielsweise der folgende Parameter verwendet werden:

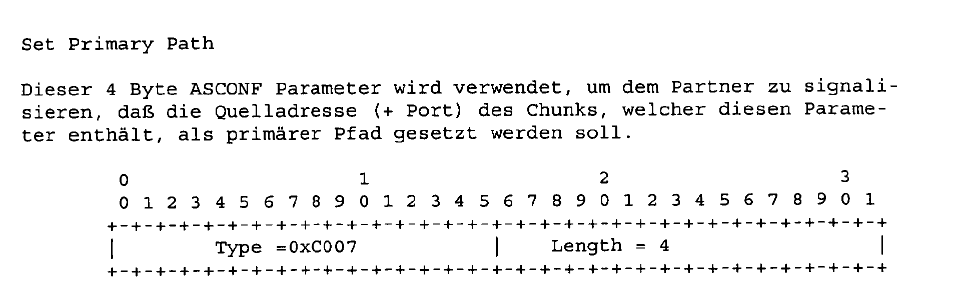

Der Parameter MERGE ONLY kann in einem INIT/INIT-ACK Chunk genutzt werden, um eine (single-homed) Assoziation nur zum Zweck der Ermittlung der Adreßumsetzungsbeziehung aufzubauen. Diese temporäre Assoziation soll dabei nicht dem Transport von Daten dienen, sondern nur die Umsetzungsbeziehung durchlaufen und anschließend mit der parallelen Assoziation verknüpft werden:

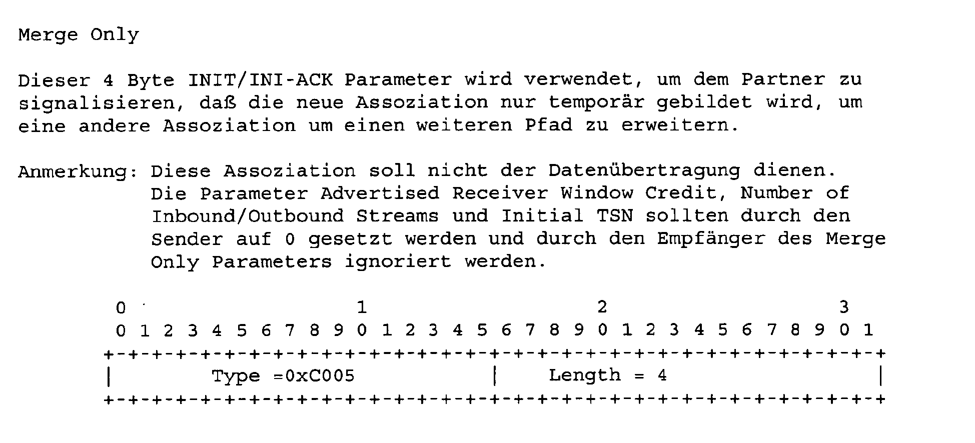

Die in Fig. 3C dargestellte Verknüpfung der beiden Verbindungen 318 und 320 aus Fig. 3B zu der Assoziation 208 kann nun erfolgen, indem Host A über die erste Verbindung 318 einen ASCONF Chunk mit folgendem Format an Host B sendet:

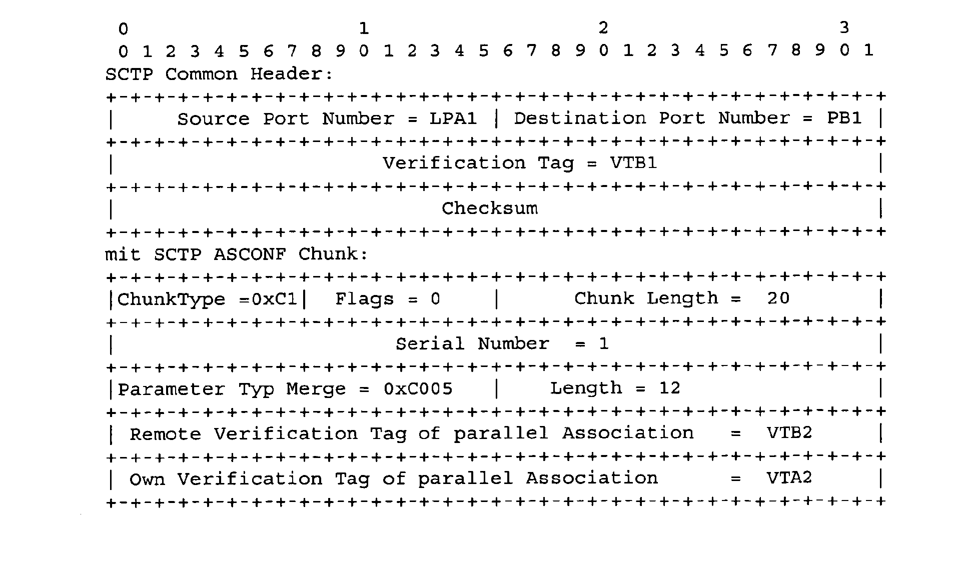

Bei Host B werden die Verification Tags überprüft. Wurde die zweite Assoziation 320 als "merge only" Typ aufgebaut, kann auch dieses Kriterium geprüft werden. Ebenso kann überprüft werden, ob die zweite Assoziation aktiv ist.

Die Prüfung der Verification Tags dient dabei der Sicherheit, indem so verhindert werden kann, daß sich unberechtigte Komponenten in die Assoziation verbinden.

War die Überprüfung erfolgreich, beendet Host B die zweite Verbindung 320, z.B. durch Senden eines ABORT Chunks über die Verbindung 320, übernimmt die Adresse GA2 mit zugeöhrigem Port GPA2 als zweite Adresse (und damit als zweiten Pfad) für die erste Verbindung 318, die auf diese Weise zur zweipfadigen Assoziation 208 wird. Den erfolgreichen Abschluß dieser Verknüpfung signalisiert Host B dann über den ersten Pfad 208A der Assoziation 208, beispielsweise mittels des folgenden ASCONF-ACK Chunks:

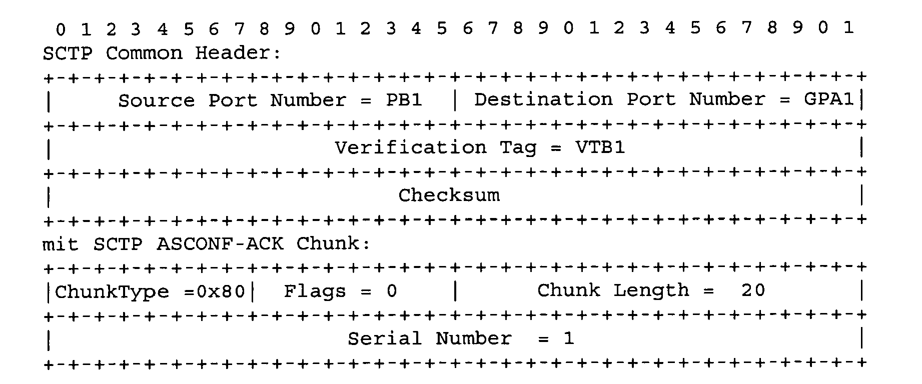

Das Ergebnis ist die Assoziation 208 gemäß folgender Übersicht:

| | Host A: | Host B: |
|---|---|---|
| Erste eigene IP Adresse | LA1 | B1 |
| Zweite eigene IP Adresse | LA2 | B2 |
| Erster eigener Port | LPA1 | PB1 |
| Zweiter eigener Port | LPA2 | PB2 |
| Erste Partner IP Adresse | B1 | GA1 |
| Erster Partner Port | PB1 | GPA1 |
| Zweite Partner IP Adresse | B2 | GA2 |
| Zweiter Partner Port | PB2 | GPA2 |
| Eigenes Verification Tag | VTA1 | VTB1 |
| Partner Verification Tag | VTB1 | VTA1 |

Anschließend kann einer der Pfade 208A, 208B als primärer Pfad festgelegt werden.

Es sei darauf hingewiesen, daß die vorstehend beschriebenen Protokolle, Nachrichten, Nachrichtenelemente und Parameter lediglich eine von vielen möglichen Implementierungen der Erfindung wiedergeben. Es ist offensichtlich, daß die detailliert beschriebenen SCTP Chunks und Parameter für andere Protokolle entsprechend angepaßt werden müssen, um die für diese Protokolle geltenden Konventionen, beispielsweise andere Quittungs- oder Sicherungsmechanismen, zu erfüllen. Ferner ist ausgehend von den beschriebenen Ausführungsbeispielen offensichtlich, wie die Lehre der vorliegenden Erfindung für SCTP unter Nutzung anderer Chunks und Parameter angewendet werden kann.

## Patentansprüche

1. Verfahren zum Aufbau einer multi-homed Verbindung (208) mit einer Anzahl n von Pfaden zwischen zwei Komponenten (102, 112) eines Kommunikationsnetzes (100, 200), wobei die Komponenten (102, 112) jeweils mindestens n Kommunikationsadressen (204A, 204B, 114A, 114B) aufweisen und wobei im Verbindungsweg eine Umsetzung der Kommunikationsadressen (204A, 204B) zumindest einer ersten der Komponenten (102) stattfindet, mit folgenden Verfahrensschritten:
- Ermitteln von n Umsetzungsbeziehungen von für die n Pfade vorgesehenen n Kommunikationsadressen durch die Komponenten; und
- Aufbau der multi-homed Verbindung durch Aufbau der n Pfade anhand der ermittelten Umsetzungsbeziehungen.

2. Verfahren nach Anspruch 1, bei dem zumindest eine Anzahl k der n Umsetzungsbeziehungen ermittelt werden, indem für k Kommunikationsadressen Testnachrichten zwischen den Komponenten ausgetauscht werden, welche k Umsetzungsbeziehungen liefern, wobei die Testnachrichten so gewählt sind, daß die Umsetzung der Kommunikationsadressen für Testnachrichten identisch ist zur Umsetzung der Kommunikationsadressen für Pfade der multi-homed Verbindung.

3. Verfahren nach Anspruch 1, bei dem zumindest eine Anzahl m der n Umsetzungsbeziehungen ermittelt werden, indem m single-homed Verbindungen zwischen den Komponenten aufgebaut werden.

4. Verfahren nach Anspruch 3, bei dem die multi-homed Verbindung aufgebaut wird, indem die m single-homed Verbindungen als m Pfade zu der multi-homed Verbindung verknüpft werden.

5. Verfahren nach einem der vorhergehenden Ansprüche, **dadurch gekennzeichnet, daß** die multi-homed Verbindung eine Verbindung gemäß des geeignet erweiterten Stream Control Transmission Protocol SCTP ist.

6. Verfahren nach Anspruch 5, **dadurch gekennzeichnet, daß** das Protokoll SCTP mit folgenden Erweiterungen angewendet wird:
- Aufbau von single-homed Verbindungen mit Verification Tags; und
- Parameter Merge SCTP Endpoint in Chunks vom Typ ASCONF, in denen zumindest die Verification Tags zu verknüpfender single-homed Verbindungen übermittelt werden.

7. Komponente (102, 112) eines Kommunikationsnetzes (100, 200), die mindestens n Kommunikationsadressen (204A, 204B, 114A, 114B) aufweist, wobei ein Verbindungsweg des Kommunikationsnetzes zwischen der Komponente und zumindest einer weiteren Komponenten eine Umsetzung von Kommunikationsadressen aufweist, wobei die Komponente (102, 112) ferner folgendes aufweist:
- Mittel zum Ermitteln einer Anzahl n von Umsetzungsbeziehungen von für n Pfade vorgesehenen n Kommunikationsadressen; und
- Mittel zum Aufbau einer multi-homed Verbindung mit n Pfaden durch Aufbau der n Pfade anhand der ermittelten Umsetzungsbeziehungen.

8. Komponente eines Kommunikationsnetzes nach Anspruch 7 mit Mitteln zum Ermitteln zumindest einer Anzahl k der n Umsetzungsbeziehungen, welche Mittel zum Austauschen von Testnachrichten für k Kommunikationsadressen zwischen der Komponenten und der weiteren Komponente zum Liefern von k Umsetzungsbeziehungen umfassen, wobei die Testnachrichten so gewählt sind, daß die Umsetzung der Kommunikationsadressen für Testnachrichten identisch ist zur Umsetzung der Kommunikationsadressen für Pfade der multi-homed Verbindung.

9. Komponente eines Kommunikationsnetzes nach Anspruch 7 mit Mitteln zum Ermitteln zumindest einer Anzahl m der n Umsetzungsbeziehungen, welche Mittel zum Aufbau von m single-homed Verbindungen zwischen den Komponenten umfassen.

10. Komponente eines Kommunikationsnetzes nach Anspruch 9, bei der die Mittel zum Aufbau der multi-homed Verbindung Mittel zum Verknüpfen der m single-homed Verbindungen als m Pfade zu der multi-homed Verbindung umfassen.

11. Komponente eines Kommunikationsnetzes nach einem der Ansprüche 7 bis 10, **dadurch gekennzeichnet, daß** die Komponente Mittel zum Aufbau von multi-homed Verbindungen gemäß des Stream Control Transmission Protocol SCTP aufweist.

12. Komponente eines Kommunikationsnetzes nach Anspruch 11, **dadurch gekennzeichnet, daß** die Komponente das Protokoll SCTP mit folgenden Erweiterungen unterstützt:
- Aufbau von single-homed Verbindungen mit Verification Tags; und
- Parameter Merge SCTP Endpoint in Chunks vom Typ ASCONF, in denen zumindest die Verification Tags zu verknüpfender single-homed Verbindungen übermittelt werden.
